# EUROPÄISCHE PATENTANMELDUNG

(11) **EP 0 570 750 A1**
(43) Veröffentlichungstag der Anmeldung: **24.11.1993**
(21) Anmeldenummer: 93107146.8
(22) Anmeldetag: 03.05.1993
(51) Int. Cl.: C09B 67/50, C09B 47/30

(54) **Metallfreie, substituierte Phthalocyanine in der X-Modifikation, ein Verfahren zu ihrer Herstellung sowie ihre Verwendung als Pigmente**

(30) Priorität: 15.05.1992 DE 4216120
(71) Anmelder: BAYER AG, 51368 Leverkusen (DE)
(72) Erfinder: Beck, Gunther, Dr., W-5090 Leverkusen 1 (DE); Kaletta, Bernd, Dr., W-4018 Langenfeld (DE)

(57) **Zusammenfassung**

Metallfreie Phthalocyanine in der χ-Modifikation, die in bis zu vier ortho-Positionen substituiert sind, lassen sich durch Tetramerisierung eines Reaktionsgemisches bestehend aus in 3-Position substituierten Phthalodinitrilen mit Phthalodinitril in einem Molverhältnis von 4:0 bis 1:40 in Gegenwart einer Base und anschließender Temperierung bei Temperaturen zwischen 100 und 300°C herstellen. Diese stellen ausgezeichnete organische Pigmente dar.

## Beschreibung

Die Erfindung betrifft metallfreie, substituierte Phthalocyanine in der χ-Modifikation, ein Verfahren zu ihrer Herstellung sowie ihre Verwendung als Pigmente.

Metallfreie Phthalocyanine finden als brillante Farbstoffpigmente auf fast allen Gebieten Anwendung. Sie besitzen gute coloristische Eigenschaften verbunden mit hohen Echtheiten. Dafür ist nicht zuletzt eine einheitliche Kristallform verantwortlich zu machen. Modifikationsgemische sowie thermolabile Kristallformen beeinträchtigen diese Qualitäten und beschränken den Verwendungszweck.

Neben der α-, β- und γ-Kristallform metallfreier Phthalocyanine ist ebenfalls eine χ-Modifikation des unsubstituierten Phathalocyanins bekannt, wie z.B. in US 3.357.989, US-3.594.163, GB-A-1 280 843 oder bei J.H. Sharp und M. Lardon in "The Journal of Physical Chemistry" Vol.72, 1968, S. 3230-3235, beschrieben. Die χ-Phase ist von interessanter Farbgebung, wird jedoch erst durch ca. einwöchiges Mahlen der α-Modifikation erhalten. Darüber hinaus erfolgt in heißen organischen Lösungsmitteln eine vollständige Umlagerung in die β-Modifikation, wobei die farblichen Eigenschaften der χ-Modifikation verloren gehen.

Es wurden nun metallfreie Phthalocyanine in der χ-Modifikation der Formel (I) gefunden, 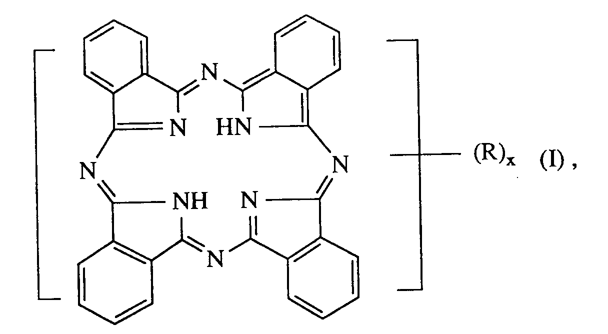
worin
- R: für Fluor, Chlor, Brom, Iod, -CN, -NO₂, -CF₃, -OR², -SR², -COOR², -CON(R²)(R³), -N(R²)(R³), -N(R²)CO(R³) und C₁-C₄-Alkyl steht und in ortho-Position der aromatischen Ringe gebunden ist, wobei als ortho-Positionen die in der Formel (II) mit Pfeilen gekennzeichneten Stellen verstanden werden 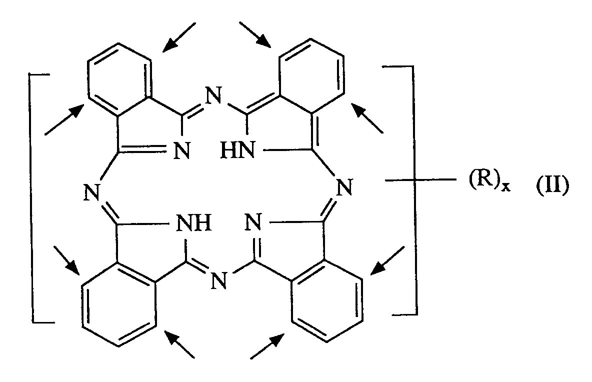
- R² und R³: steht unabhängig voneinander für Wasserstoff oder C₁-C₄-Alkyl, besonders Methyl, Ethyl und Isopropyl und
- x: steht für 0,1 bis 4,0, vorzugsweise für 0,1 bis 1,5 und stellt einen statistischen Substitutionsgrad dar.

Als besonders geeignete Substituenten R der allgemeinen Formel (I) sind -CN, -Cl, -Br, -OMe, -NO₂, Methyl, Ethyl und Isopropyl zu nennen, wobei in einer ganz besonderen Ausführungsform R für Cyano steht.

Hergestellt werden können die erfindungsgemäßen Phthalocyanine der Formel (I) zunächst durch Umsetzung von in 3-Position substituierten Phthalodinitrilen der Formel (III) mit Phthalodinitril der Formel (IV) in einem Molverhältnis von 4:0 bis 1:40 in Gegenwart einer Base bei Temperaturen von 80-300°C in einem geeigneten organischen Lösungsmittel, wobei zunächst die α-Modifikation gebildet wird. 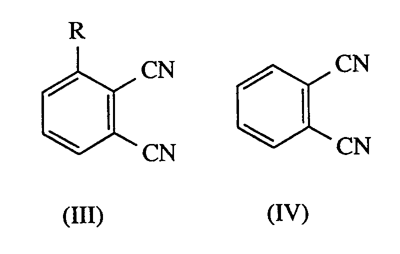
Die substituierten Phthalodinitrile der Formel (III) sind literaturbekannt (z.B. R=-F CA-RN 65610-13-1, R=-Cl CA-RN 76241-79-7, R=-Br CA-RN 76241-80-0, R=-I CA-RN 76241-81-1, R=-CN CA-RN 38700-18-4, R=-NO₂ CA-RN 51762-67-5, R=-CF₃ CA-RN 64219-34-7, R=-O-Me CA-RN 19056-23-6, R=-O-Et CA-RN 116965-11-8, R=-NH₂ CA-RN 58632-96-5, R=-NMe₂ CA-RN 61109-17-9, R=-Me CA-RN 36715-97-6) oder können nach analogen Verfahren hergestellt werden.

Die Tetramerisierung der Mischungen erfolgt dabei analog zu bekannten Verfahren, wie sie beispielsweise bei K. Venkataraman, "The Chemistry of Synthetic Dyes", Vol. II, Academic Press, Inc., New York, 1952, S. 1118-1142, oder N.M. Bigelow und M.A. Perkins in Lubs (Hrsg.), "The Chemistry of Synthetic Dyes and Pigments". Reinhold Publishing Corp., New York, 1955, S. 577-606, und in der dort zitierten Literatur beschrieben sind.

Die α-Form, die entweder direkt bei der Synthese anfällt oder durch Schwefelsäureverpastung aus jeder anderen Form erhalten wird, wird anschließend in einem inerten organischen Lösungsmittel bei einer Temperatur von 100-300°C durch Tempern in die χ-Modifikation überführt.

Als geeigneten Basen zur Herstellung der Phthalocyanine der Formel (I) können beispielsweise tertiäre Amine wie 1,4-Diazabicyclo[2,2,2]-octan, 1,8-Diazabicyclo[5.4.0]-undec-7-en, 1,5-Diazabicyclo[4.3.0]-non-5-en, Natrium-, Kalium- und Lithiumalkoholate einwertiger C₁-C₁₂-Alkohole wie Methanol, Ethanol, Isopropanol, Butanol, Pentanol usw. oder zweiwertiger C₂-C₁₂-Alkohole wie Ethylenglykol u.a. verwendet werden.

Geeignete organische Lösungsmittel bei der Tetramerisierung von (III) und (IV) sind z.B. die unter den Basen bereits aufgeführten Alkohole selbst, aprotische dipolare organische Lösungsmittel, z.B. N,N-Di-C₁-C₄-alkylamide aliphatischer C₁-C₆-Carbonsäuren, wie N,N-Dimethylformamid, N,N,-Diethylformamid, N-Methylpyrrolidinon, N-Methylcaprolactam; aliphatische Sulfoxide wie Dimethylsulfoxid, aliphatische Sulfone wie Dimethylsulfon und Tetramethylensulfon; ferner Tetramethylharnstoff, N,N'-Dimethyl-1,3-imidazolidin-2-on und Hexamethylphosphorsäuretrisamid.

Die Umsetzung kann bei Temperaturen von 80-300°C, vorzugsweise bei 80-200°C erfolgen. Die Tetramerisierung des substituierten Phthalodinitrils der Formel (III) mit dem Phthalodinitril der Formel (IV) erfolgt vorzugsweise in einem Molverhältnis von 1:3 bis 1:40.

Die Reaktion ist beendet, wenn dünnschichtchromatagraphisch kein Edukt mehr nachweisbar ist.

Für die Umwandlung der zunächst gebildeten α-Modifikation in die erfindungsgemäße χ-Modifikation der Formel (I) eignen sich insbesondere organische Lösungsmittel, beispielsweise Alkohole, Phenole, dipolar-aprotische Lösungsmittel wie Dimethylformamid, Dimethylacetamid, Dimethylsulfoxid, N-Methylpyrrolidon, sowie bevorzugt aliphatische oder aromatische Kohlenwasserstoffe, die gegebenenfalls durch Alkyl, Acyl, Alkoxy, Halogen, Ester oder Nitrogruppen substituiert sein können wie Decalin, Xylol, Metsitylen, Chlorbenzol, Dichlorbenzol, Trichlorbenzol, Naphthalin, 1-Methylnaphthalin, Methylbenzoat, 2-Methylnapthalin, 1-Chlornaphthalin, 2-Chlornaphthalin und heterocyclische Lösungsmittel wie Pyridin, Picolin, Chinolin, die gegebenenfalls substituiert sind.

Die Modifikationsumwandlung erfolgt bei einer Temperatur von 100-300°C, vorzugsweise bei 150-250°C.

Bevorzugt ist eine einstufige Herstellungsvariante, bei der die Verbindungen der Formel (I) durch Umsetzung von (III) mit (IV) in einem Molverhältnis von 4:0 bis 1:40, vorzugsweise von 1:3 bis 1:40, in Gegenwart einer Base bei einer Temperatur von 150 bis 250°C in einem geeigneten organischen Lösungsmittel direkt, ohne gesondertes Tempern, in der χ-Modifikation erhalten werden.

Als geeingete Basen für diese einstufige Verfahrensvariante können tertiäre Amine wie 1,4-Diazabicyclo[2.2.2]-octan, 1,8-Diazabicyclo[5.4.0]-undec-7-en, 1,5-Diazabicyclo[4.3.0]non-5-en u.a verwendet werden.

Geeignete Lösungsmittel für diese einstufige Verfahrensvariante sind Hydroxyalkylaromaten wie Benzylalkohol, 1- und 2-Phenylethanol, Hydroxymethylnaphthaline und viele andere. Auch Mischungen von Alkoholen und Aromaten eignen sich als Lösungsmittel für die einstufige Verfahrensvariante.

Die χ-Modifikation metallfreier Phthalocyanine bezeichnet Kristallformen, die sich einerseits durch ihre spektroskopischen Eigenschaften, z.B. im sichtbaren und nahen IR-Bereich durch ein starkes Absorptionsmaximum bei ca. 800 nm auszeichnen und andererseits sich durch zwei starke Signale bei Bragg'schen Winkeln (2Θ) von etwa 7 und 9° von den bereits bekannten α-, β- und γ-Modifikationen unterscheiden.

Überraschend wurde nun gefunden, daß die erfindungsgemäßen Phthalocyanine der Formel (I) in der χ-Modifikation stabil sind und eine thermische Phasenumwandlung, wie sie bei dem unsubstituierten Phthalocyanin in der χ-Modifikation gefunden wird, nicht beobachtet wird. Die erfindungsgemäßen Phthalocyanine der Formel (I) besitzen somit den überraschenden Vorteil, daß ihre interessanten Farbtöne durch thermische Phasenstabilität erhalten bleiben und sie somit hohe Echtheiten liefern. Gegenüber dem bereits bekannten unsubstituierten Phthalocyanin in der χ-Modifikation, wie in US 3.357.989 beschrieben, das nur durch einwöchiges Mahlen der α-Modifikation erhalten werden kann, sind die erfindungsgemäßen Phthalocyanine der Formel (I) darüber hinaus sehr viel leichter zugänglich. So ist die Modifikationsumwandlung bereits nach wenigen Stunden beendet und gewährt somit eine sehr viel bessere Raumzeitausbeute.

Die erfindungsgemäßen Phthalocyanine der Formel (I) können zur Herstellung von sehr echt pigmentierten Systemen, wie Mischungen mit anderen Stoffen, Zubereitungen, Anstrichmitteln, Druckfarben, gefärbtem Papier und gefärbten makromolekularen Stoffen verwendet werden. Unter Mischungen mit anderen Stoffen können z.B. solche mit anorganischen Weißpigmenten wie Titandioxid (Rutil) verstanden werden. Zubereitungen sind z.B. Flushpasten mit organischen Flüssigkeiten und gegebenenfalls Konservierungsmitteln. Die Bezeichnung Anstrichmittel steht z.B. für physikalisch oder oxidativ trocknende Lacke, Einbrennlacke, Reaktionslacke, Zweikomponentenlacke, Dispersionsfarben für wetterfeste Überzüge und Leimfarben.

Unter Druckfarben sind solche für den Papier-, Textil- und Blechdruck zu verstehen. Insbesondere eignen sich die erfindungsgemäßen Phthalocyanine (I) zum Pigmentieren von makromolekularen organischen Stoffen.

Die makromolekularen Stoffe können natürlichen Ursprungs sein wie Kautschuk, durch chemische Modifikation erhalten werden wie Acetylcellulose, Cellulose-butyrat oder Viskose oder synthetisch erzeugt werden wie Polymerisate, Polyadditionsprodukte und Polykondensate. Genannt seien thermoplastische Polymere wie Polyvinylchlorid, Polyvinylacetat, Polyvinylpropionat, Superpolyamide, Polymerisate und Mischpolymerisate aus Acrylestern und/oder Methacrylestern, Acrylamid, Butadien, Styrol sowie Polyurethane und Polycarbonate. Die mit den erfindungsgemäßen Phthalocyaninen der Formel (I) pigmentierten Stoffe können in beliebiger Form vorliegen.

Wegen ihrer hohen Transparenz und Wetterechtheit eignen sich die erfindungsgemäßen Phthalocynanine (I) besonders zum Einsatz in Automobillacken, insbesondere für Metalliclackierungen.

Die erfindungsgemäßen Phthalocyanine (I) sind ausgezeichnet wasserecht, ölecht, säureecht, kalkecht, alkaliecht, lösungsmittelecht, überlackierecht, überspritzecht, sublimierecht, hitzebeständig, vulkanisierbeständig, sehr ergiebig, in plastischen Massen gut verarbeitbar und insbesondere ausgezeichnet wetter-, licht- und migrationsecht.

Weiterer Gegenstand der Erfindung ist schließlich die Verwendung der Phthalocynaine (I) als Farbpigmente.

Die Prozentangaben der nachfolgenden Beispiele beziehen sich auf das Gewicht; Teile sind Gewichtsteile.

### Beispiel 1

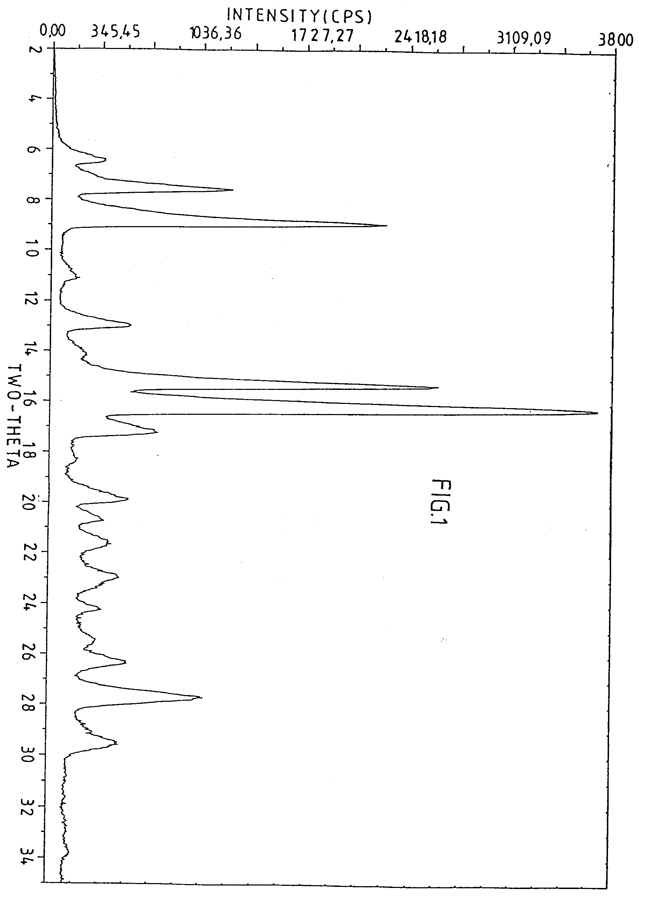

3,9 Teile 1,2,3-Tricyanobenzol und 9,6 Teile Phthalodinitril werden in 100 Teilen Amylalkohol gelöst. Dazu werden 9 Teile einer 30 %igen methanolischen Natriummethylat-Lösung gegeben und es wird 6 Stunden zum Rückfluß erhitzt. Das gebildete Produkt wird abgesaugt und in 100 Teilen 10 %iger HCl-Lösung verrührt. Das Produkt wird abgesaugt, mit Wasser neutralgewaschen und im Trockenschrank getrocknet. Das so gewonnene α-Pc(ortho-CN)_{1,00} wird in 100 Teilen 1-Methylnaphthalin 10 Stunden zum Rückfluß erhitzt. Durch Absaugen, Waschen mit Methanol und Trocknen im Trockenschrank werden 10,1 Teile χ-Pc(ortho-CN)_{1,00} erhalten. Das Röntgendiffraktionsspektrum ist in Fig. 1 abgebildet.

Mach dem in Beispiel 1 genannten Verfahren werden durch Einsatz entsprechender Mengen 3-substituierter Phthalodinitrile (III) und Phthalodinitril (IV) folgende 1-substituierte Phthalocyanine (I) in der χ-Modifikation erhalten:

| Molverhältnis | | | |
|---|---|---|---|
| Beispiel | R¹ in Formel III | III : IV | Produkt |
| 2 | -CN | 1 : 7 | χ-PC-(ortho-CN)_{0,50} |
| 3 | -CN | 1 : 11 | χ-PC-(ortho-CN)_{0,33} |
| 4 | -CN | 1 : 32 | χ-PC-(ortho-CN)_{0,12} |
| 5 | -Cl | 1 : 3 | χ-PC-(ortho-Cl)_{1,00} |
| 6 | -Cl | 1 : 7 | χ-PC-(ortho-Cl)_{0,50} |
| 7 | -Br | 1 : 5 | χ-PC-(ortho-Br)_{0,67} |
| 8 | -Me | 1 : 4 | χ-PC-(ortho-Me)_{0,80} |
| 9 | -Me | 1 : 3 | χ-PC-(ortho-Me)_{1,00} |
| 10 | -OMe | 1 : 7 | χ-PC-(ortho-OMe)_{0,50} |
| 11 | -NO₂ | 1 : 4 | χ-PC-(ortho-NO₂)_{0,80} |
| 12 | -NO₂ | 1 : 7 | χ-PC-(ortho-NO₂)_{0,50} |

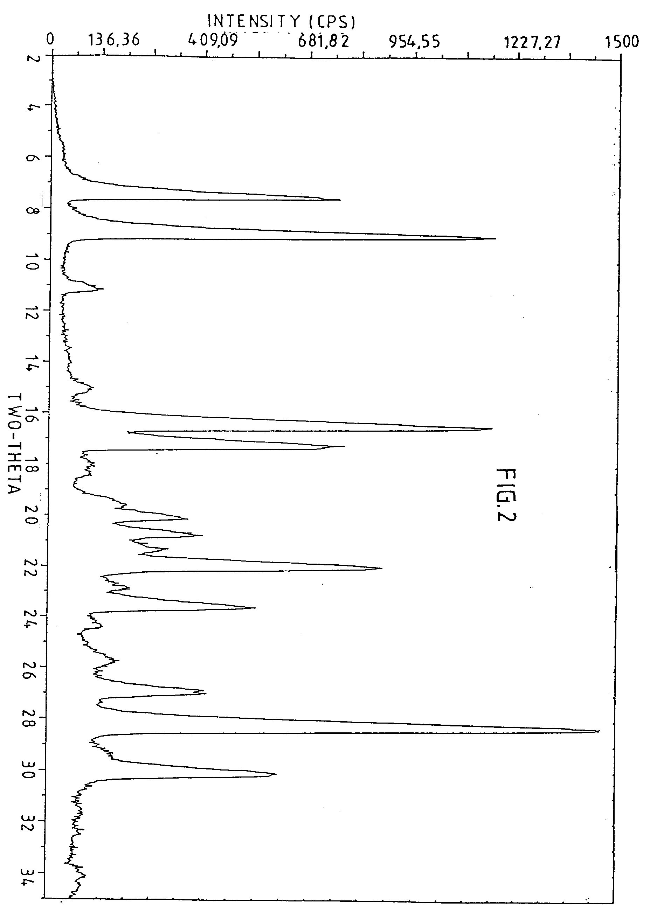

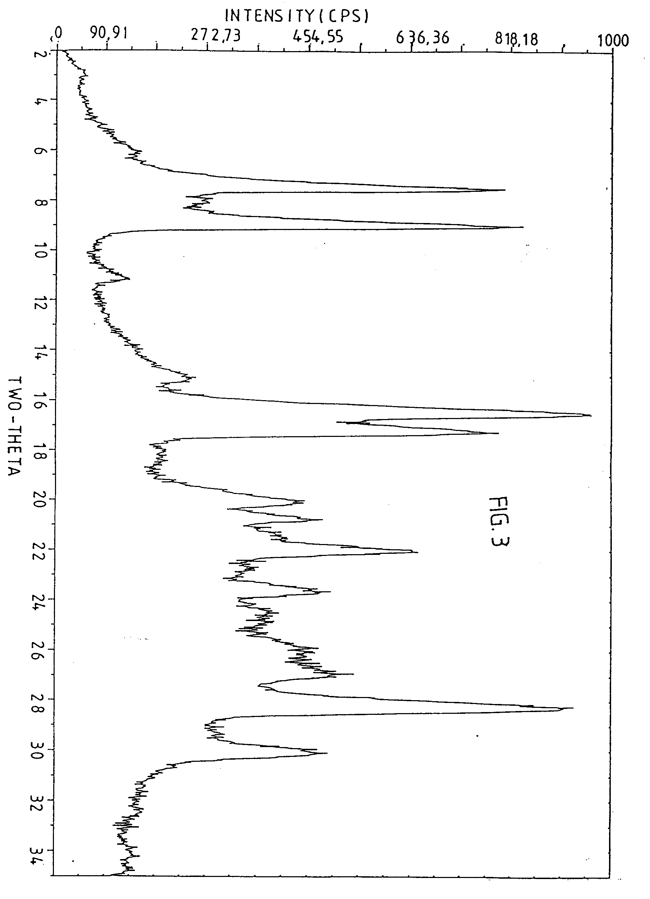

Die Röntgendiffraktionsspektren der Beispiele 2 und 11 sind in Fig. 2 und Fig. 3 abgebildet.

### Beispiel 13

0,78 Teile 1,2,3-Tricyanobenzol und 12,16 Teile Phthalodinitril werden in 100 Teilen Benzylalkohol gelöst. Dazu werden 6,9 Teile 1,5-Diazabicyclo[4.3.0]-non-5-en gegeben und es wird 12 Stunden zum Rückfluß erhitzt. Das gebildete Produkt wird abgesaugt, mit Methanol gewaschen und im Trockenschrank bei 50°C getrocknet. Es werden 6,6 Teile χ-Pc(ortho-CN)_{0,2} erhalten.

### Anwendung 1

### Pigmentierte Einbrennlackierung

8 g feingemahlenes Pigment gemäß Beispiel 1 werden in 92 g eines Einbrennlackes folgender Zusammensetzung dispergiert:
33 % Alkydharz
15 % Melamin/Formaldehyd-Harz
5 % Glykolmonomethylether
34 % Xylol
13 % Butanol
Als Alkydharze kommen Produkte auf Basis synthetischer und pflanzlicher Fettsäure wie Kokosöl, Rizinusöl, Rizinenöl, Leinöl und andere in Frage. Anstelle von Melamin/Formaldehyd-Harzen können Harnstoff/Formaldehyd-Harze verwendet werden.

Nach erfolgter Dispergierung wird der pigmentierte Lack jeweils auf Papier-, Glas-, Kunststoff- und Metall-Folien aufgetragen und 30 Minuten bei 130°C eingebrannt. Die Lackierungen besitzen sehr gute Licht- und Wetterbeständigkeit sowie gute Überlackierechtheit.

### Anwendung 2

### Pigmentierte Thermoplaste

0,2 g feingemahlenes Pigment nach Beispiel 1 werden mit jeweils 100 g Polyethylen-, Polypropylen- und Polystyrolgranulat gemischt. Die jeweiligen Mischungen können entweder bei 220 bis 280°C direkt in einer Spritzgußmaschine verspritzt oder in einer Strangpresse zu gefärbten Stäben beziehungsweise auf dem Mischwalzwerk zu gefärbten Fellen verarbeitet werden. Die Stäbe beziehungsweise Felle werden gegebenenfalls granuliert und in einer Spritzgußmaschine verspritzt.

Die blauen Formlinge besitzen eine sehr gute Licht- und Migrationsechtheit. In ähnlicher Weise können bei 280 bis 300°C, gegebenenfalls unter Stickstoffatmosphäre, synthetische Polyamide aus Caprolactam oder aus Adipinsäure und Hexamethylendiamin oder Polyethylenterephthalat gefärbt werden.

### Anwendung 3

### Pigmentierte Druckfarbe

Mit einer Druckfarbe, hergestellt durch Anreiben von 35 g feingemahlenem Pigment nach Beispiel 1 und 65 g Leinöl und Zugabe von 1 g Sikkativ (CO-Naphthenat, 50 %ig in Testbenzin) werden blaue Offset-Drucke hoher Brillanz und Farbstärke und sehr gute Licht- und Lackierechtheiten erhalten. Verwendung dieser Druckfarbe in Buch-, Licht-, Stein- oder Stahlstichdruck führt zu blauen Drucken ähnlicher Echtheiten. Verwendet man das Pigment zur Färbung von Blechdruck oder Tiefdrucken oder niedrigviskosen Drucktinten, erhält man blaue Drucke ähnlicher Echtheiten.

## Patentansprüche

1. Metallfreie Phthalocyanine in der χ-Modifikation der Formel (I) 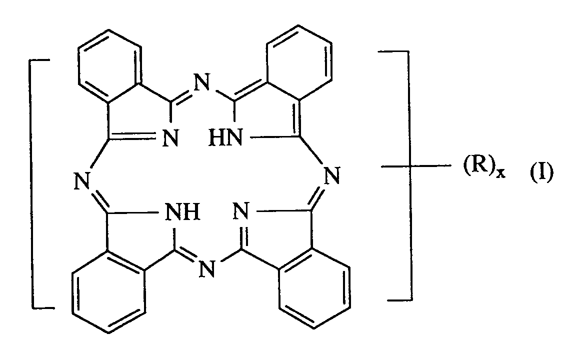 worin
R für Fluor, Chlor, Brom, Iod, -CN, -NO₂, -CF₃, -OR², -SR², -COOR², -CON(R²)(R³), -N(R²)(R³), -N(R²)CO(R³) und C₁-C₄-Alkyl steht und in ortho-Position gebunden ist und
R² und R³ unabhängig voneinander für Wasserstoff oder C₁-C₄-Alkyl besonders Methyl, Ethyl und Isopropyl stehen und
x für 0,1 bis 4,0 steht und einen statistischen Substitutionsgrad darstellt.

2. Phthalocyanine gemäß Anspruch 1, dadurch gekennzeichnet, daß x für 0,1 bis 1,5 steht.

3. Phthalocyanine gemäß Anspruch 1, dadurch gekennzeichnet, daß R für -CN, -Cl, -Br, -OMe, -NO₂ und Methyl steht.

4. Phthalocyanine gemäß Anspruch 1, dadurch gekennzeichnet, daß R für Cyano steht.

5. Verfahren zur Herstellung metallfreier, substituierter Phthalocyanine in der χ-Modifikation gemäß Anspruch 1, dadurch gekennzeichnet, daß ein in 3-Position substituiertes Phthalodinitril der Formel (III), in der R die in Anspruch 1 angegebene Bedeutung hat, mit Phthalodinitril der Formel (IV) 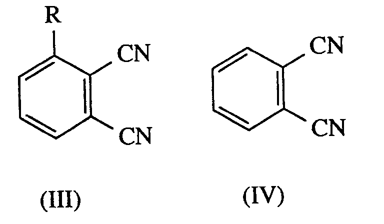 in einem Molverhältnis von 4:0 bis 1:40, vorzugsweise von 1:3 bis 1:40, in einem organischen Lösungsmittel in Gegenwart einer Base bei einer Temperatur von 80 bis 300°C, vorzugsweise von 80 bis 200°C, umgesetzt wird und das gebildete Phthalocyanin in einem inerten Lösungsmittel bei einer Temperatur von 100 bis 300°C getempert wird.

6. Verfahren zur Herstellung von Phthalocyaninen gemäß Anspruch 5, dadurch gekennzeichnet, daß die verwendete Base ein tertiäres Amin oder Natrium-, Kalium- und Lithiumalkoholate einwertiger C₁-C₁₂-alkohole oder zweiwertiger C₂-C₁₂-Alkohole ist.

7. Verfahren zur Herstellung von Pthalocyaninen gemäß Anspruch 5, dadurch gekennzeichnet, daß das bei der Umsetzung verwendete Lösungsmittel die unter Anspruch 6 genannten Alkohole selbst, oder ein aprotisches dipolares organisches Lösungsmittel ist.

8. Verfahren zur Herstellung von Phthalocyaninen gemäß Anspruch 5, dadurch gekennzeichnet, daß das bei der Umsetzung von (III) mit (IV) gebildete α-Phthalocyanin in einem inerten organischen Lösungsmittel bei einer Temperatur von 150 bis 250°C getempert wird.

9. Verfahren zur Herstellung von Phthalocyaninen gemäß Anspruch 5, dadurch gekennzeichnet, daß das inerte organische Lösungsmittel zum Tempern ein Alkohol, Phenol oder ein dipolar-aprotisches Lösungsmittel ist

10. Verfahren zur Herstellung metallfreier, substituierter Phthalocyanine in der χ-Modifkation gemäß Anspruch 1, dadurch gekennzeichnet, daß in einer einstufigen Reaktion ein in 3-Position substituiertes Phthalodinitril der Formel (III), in der R die in Anspruch 1 angegebene Bedeutung hat, mit Phthalodinitril der Formel (IV) 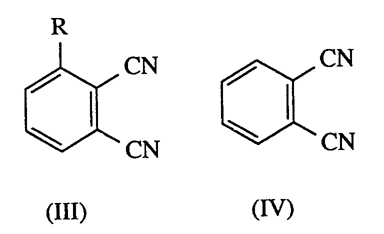 in einem Molverhältnis von 4:0 bis 1:40, vorzugsweise 1:3 bis 1:40, in einem organischen Lösungsmittel, insbesondere in Hydroxyalkylaromaten, in Gegenwart einer Base bei Temperaturen von 150 bis 250°C umgesetzt wird.

11. Verwendung von metallfreien substituierten Phthalocyaninen in der χ-Modifikation gemäß Anspruch 1 als Pigment.
